# EUROPÄISCHE PATENTSCHRIFT

(11) **EP 2 113 429 B1**
(45) Veröffentlichungstag und Bekanntmachung des Hinweises auf die Patenterteilung: **16.03.2011**
(21) Anmeldenummer: 08008250.6
(22) Anmeldetag: 30.04.2008
(51) Int. Cl.: B60R 21/215

(54) **Innenverkleidung mit integrierter Airbagabdeckung**
Interior furnishings with integrated airbag cover
Habillage intérieur doté d'un recouvrement d'airbag intégré

(43) Veröffentlichungstag der Anmeldung: 04.11.2009
(73) Patentinhaber: Peguform GmbH, 79268 Bötzingen (DE)
(72) Erfinder: Nogaret, Eric, 68600 Bisheim (FR); Pignard, Pierre, 68320 Jebsheim (FR)
(74) Vertreter: Neunert, Peter Andreas

(56) Entgegenhaltungen:
- EP-A- 1 754 635
- DE-A1- 19 617 874
- FR-A- 2 768 675

## Beschreibung

Die Erfindung betrifft ein Innenverkleidungsbauteil für Kraftfahrzeuge, insbesondere Instrumententafel-, Seiten-, Säulen- oder Türverkleidung, mit einer integrierten Airbagabdeckung sowie ein Verfahren und eine Vorrichtung zu seiner Herstellung.

Bauteile für Innenverkleidungen von Kraftfahrzeugen dienen heute üblicherweise auch immer dazu, Airbagmodule abzudecken. Um ein problemloses Entfalten des Airbags im Falle eines Unfalles zu gewährleisten, sind die Bauteile mit Airbagabdeckungen versehen, die sich beim Entfalten des Airbags leicht öffnen und damit die Möglichkeit schaffen, dass sich der Airbag im Innenraum des Kraftfahrzeuges aufbläht. Ein reibungsloses und sicheres Funktionieren des Airbags ist nur dann möglich, wenn die Airbagabdeckung bestimmte Funktionen aufweist, die das Aufklappen des Airbags regulieren. So muss die Airbagabdeckung bspw. mit einem Scharnier ausgerüstet sein, das ein Aufklappen der Abdeckung ermöglicht. Des Weiteren muss gewährleistet sein, dass die Abdeckung beim Aufklappen nicht unkontrolliert zerstört und in Form von Splittern in den Fahrzeuginnenraum geschleudert wird und damit die Insassen des Fahrzeuges gefährdet. Um dies zu vermeiden, wird eine Airbagabdeckung üblicherweise mit einem Splitterschutz ausgerüstet. Diese Funktion wird häufig durch separate Systeme, wie z. B. Bleche oder Gewebe, erfüllt.

Das Airbagscharnier hat in der Regel auch die Funktion, Energie abzubauen, die im Überschuss vorhanden ist, wenn sich der Airbag, um seine Schutzfunktion zu erfüllen, schnell und explosionsartig entfaltet, wozu entsprechend viel Energie notwendig ist. Bei diesem explosionsartigen Entfalten des Airbags könnte es zu einer schweren Schädigung des Trägerteils kommen, wobei scharfe Kanten entstehen würden, die schwerwiegenden Verletzungen der Kraftfahrzeuginsassen verursachen könnten, was dadurch vermieden werden soll, dass bereits beim Öffnen der Airbagabdeckung ein Teil der überschüssigen Energie absorbiert-wird und somit das Verletzungspotenzial für die Fahrzeuginsassen reduziert wird.

Aus dem Stand der Technik sind unterschiedliche Maßnahmen bekannt, um einen Teil der Energie beim Öffnen der Airbagabdeckung zu absorbieren, die alle das Ziel haben, dem Airbag beim Entfalten im Bereich der Airbagabdeckung einen Widerstand entgegenzusetzen, bei dessen Überwindung ein Teil der Energie verbraucht wird. Die Airbagabdeckung selber ist dabei üblicherweise aus mehreren Kunststoffschichten aufgebaut, die dem Deckel eine ausreichende Elastizität und Festigkeit verleihen, wobei in der Regel unterschiedliche Kunststoffe für die einzelnen Schichten eingesetzt, deren Eigenschaften miteinander kombiniert werden, um dem sich entfaltenden Airbag einen ausreichenden Widerstand entgegensetzen zu können. Häufig ist der Deckel auch hybridartig aufgebaut, wobei im Kunststoff Verstärkungsmaterialien eingebaut sind, mit deren Hilfe die nötige Festigkeit für die Abdeckung erzielt wird. Als Verbundmaterialien können bspw. Bleche und Gewebe eingesetzt werden.

Ein gezieltes Öffnen der Airbagabdeckung erreicht man auch dadurch, dass im Bereich der Airbagabdeckung zusätzlich Sollbruchlinien bzw. Verschwächungen angeordnet sind, mit deren Ausprägung einerseits die Kraft, die erforderlich ist, um die Abdeckung aufzubrechen, geregelt werden kann und durch deren räumliche Anordnung andererseits ein gezieltes und sauberes Aufbrechen der Abdeckung kontrolliert wird.

Aus dem oben Gesagten ist bereits zu erkennen, dass eine funktionsgerechte Gestaltung der Airbagabdeckung mit relativ viel Aufwand verbunden ist.

Da an die übrigen Bereiche eines Bauteils für eine Innenverkleidung keine derart hohen Anforderungen gestellt werden, ist es üblich, das Bauteil in mehreren Verfahrensschritten fertigzustellen, wobei häufig zunächst der Airbagbereich separat oder zusammen mit dem Träger für das Kunststoffformteil gefertigt wird und in einem anschließenden Schritt das Bauteil durch Aufbringen zusätzlicher Zwischenschichten und Dekorschichten, die die oben geschilderten Funktionen erfüllen, fertiggestellt wird.

Diese Art der Fertigung ist nicht nur sehr zeitaufwändig, sondern erfordert auch einen hohen technischen Aufwand. Man hat daher in der Vergangenheit immer wieder versucht, den Bereich der Airbagabdeckung von Innenverkleidungsbauteilen für Kraftfahrzeuge einfacher und weniger aufwändig zu gestalten, ohne dabei die Funktionsfähigkeit des Airbags zu beeinträchtigen und die Sicherheit der Insassen zu gefährden.

In der gattungsgemäßen DE 196 17 874 C2 wird die Herstellung einer Airbagabdeckung für eine Instrumententafel eines Kraftfahrzeuges beschrieben, wobei die Instrumententafel aus einer Trägerschicht und einer Deckschicht besteht und die Airbagabdeckung mit dem übrigen Bereich der Instrumententafel über ein Scharnier verbunden ist. Das Verfahren ist so konzipiert, dass die Instrumententafel mitsamt Airbagabdeckung über Spritzgießen in einem einzigen Formwerkzeug über mehrere Formvorgänge hergestellt werden kann. Dabei wird in dem Formwerkzeug zunächst die Trägerschicht ausgebildet, die dann anschließend in einem zweiten Formvorgang mit einer Deckschicht versehen wird. Bei der Herstellung des Trägers wird ein in das Kernformteil eingepasster Gleitstempel in die Kavität eingeführt, um auf diese Weise im Träger im Bereich des Scharniers Löcher auszubilden. Diese Scharnierlöcher sind als Durchlass für das im zweiten Formvorgang injizierte Weichharz vorgesehen, um auf diese Weise auf der rückseitigen Oberfläche des Trägers im Bereich des Scharniers einen Streifen auszubilden, durch den auf der Rückseite des Trägers das Scharnier gestärkt und die Airbagabdeckung beim Aufklappen gehalten wird. Das Aufklappen selber wird durch eine mit dem Scharnier korrespondierende Sollbruchlinie erleichtert. Ein Nachteil dieser Anordnung besteht darin, dass die Airbagabdeckung selber nur einseitig beschichtet ist, weshalb erfahrungsgemäß kein optimaler Splitterschutz gewährleistet ist. Dieser Nachteil könnte dadurch behoben werden, dass in einem zusätzlichen Arbeitsgang in einem gesonderten Werkzeug auf der Rückseite der Airbagabdeckung durch Kleben oder sonstige Maßnahmen ein zusätzlicher Splitterschutz aufgebracht wird. Dies würde jedoch gleichzeitig bedeuten, dass dadurch der gesamte Herstellungsprozess wesentlich kosten- und zeitaufwändiger wird.

Es ist die Aufgabe der vorliegenden Erfindung, ein Innenverkleidungsbauteil für Kraftfahrzeuge zur Verfügung zu stellen, das kostengünstig und mit geringem Zeitaufwand hergestellt werden kann, ohne dabei die Nachteile des Standes der Technik aufzuweisen.

Diese Aufgabe wird erfindungsgemäß gelöst durch ein Innenverkleidungsbauteil für Kraftfahrzeuge mit integrierter Airbagabdeckung mit den Merkmalen des Anspruchs 1. Vorteilhafte Weiterbildungen des erfindungsgemäßen Innenverkleidungsbauteils ergeben sich aus den entsprechenden Unteransprüchen.

Es ist auch Aufgabe der vorliegenden Erfindung, ein Verfahren zur Herstellung eines Innenverkleidungsbauteils mit integrierter Airbagabdeckung für ein Kraftfahrzeug zur Verfügung zu stellen, das die Nachteile der Verfahren nach dem Stande der Technik nicht aufweist.

Gelöst wird diese Aufgabe durch ein Verfahren zur Herstellung eines Innenverkleidungsbauteils für ein Kraftfahrzeug mit den Merkmalen des Anspruchs 10. Vorteilhafte Ausgestaltungen und Weiterbildungen sind Gegenstand der entsprechenden Unteransprüche.

Es ist eine weitere Aufgabe der vorliegenden Erfindung eine Vorrichtung zur Herstellung eines Innenverkleidungsbauteils eines Kraftfahrzeuges mit integrierter Airbagabdeckung zur Verfügung zu stellen, das die Nachteile der Vorrichtungen nach dem Stande der Technik nicht aufweist.

Gelöst wird diese Aufgabe durch eine Vorrichtung mit den Merkmalen des Anspruchs 15. Vorteilhafte Ausgestaltungen der erfindungsgemäßen Vorrichtung sind Gegenstand der entsprechenden Unteransprüche.

Die Erfindung beruht auf der Nutzung von elastischen thermoplastischen Kunststoffmaterialien, wie z. B. thermoplastischer Polyetherester (TPEE), thermoplastisches Polystyrol (TPS), thermoplastisches Vulkanisat (TPEV), Polyvinylchlorid (PVC) oder thermoplastisches Polyurethan (TPU), zur Herstellung einer Dekorschicht auf einem Träger für ein Innenverkleidungsbauteil für Kraftfahrzeuge, wobei das Elastomer im Bereich der Airbagabdeckung gleichzeitig eine Scharnier-, Splitterschutz- und Energieabsorptionsfunktion übernimmt. Auf diese Weise kann in einem einzigen Formwerkzeug ein komplettes Innenverkleidungsbauteil mit funktionsfähiger integrierter Airbagabdeckung hergestellt werden. Dadurch dass keine weiteren Werkzeuge erforderlich sind, können die Herstellkosten aufgrund der reduzierten Investitionssummen deutlich gesenkt werden.

Der Kern der Erfindung besteht darin, dass die Dekorschicht im Bereich der gesamten Airbagabdeckung als multifunktionelle, die Airbagabdeckung beidseitig umschließende Schicht ausgebildet wird. Diese Schicht übernimmt die Funktionen eines Scharniers, eines Splitterschutzes und eines Energieabsorbers, die sonst üblicherweise durch separate Systeme, wie z. B. Bleche, Gewebe und andere Einrichtungen, erfüllt werden. Dabei besitzt die Dekorschicht zur Sichtseite des Innenverkleidungsbauteils hin optische und haptische Funktionen, während die Schicht auf der Rückseite der Airbagabdeckung als Splitterschutz fungiert. Um dem elastischen thermoplastischen Material den Zugang auf die Rückseite des Trägers bzw. auf die Rückseite der Airbagabdeckung zu ermöglichen, sind zumindest im Bereich des Scharniers, vorteilhaft jedoch verteilt über den gesamten Bereich der Airbagabdeckung, ein oder mehrere lokale Durchbrüche vorgesehen, durch die beim Injizieren der Dekorschicht das Dekormaterial auf die Rückseite des Trägers bzw. der Airbagabdeckung gelangt. Insbesondere erreicht man dadurch, dass die Airbagabdeckung anschließend sandwichartig in das Dekormaterial eingelagert ist, einen optimalen Splitterschutz. Gleichzeitig übernimmt das Elastomer die Funktion des Scharniers und dient damit auch als Energieabsorber, während es auf der Vorderseite eine Dekorfunktion wahrnimmt.

Alle diese Funktionen werden sonst in der Regel durch separate Systeme erfüllt, wie z. B. Bleche, Gewebe oder sonstige Einrichtungen.

Der Träger des Innenverkleidungsbauteils besteht üblicherweise aus einem thermoplastischen Kunststoff aus der Gruppe Polypropylen (PP), Polybutylenterephthalat (PBT), Polyamid (PA), Acrylnitril-Butadien-Styrol (ABS), Acrylnitril-Butadien-Styrol / Polycarbonat-Copolymerisat (ABS/PC) oder Polyoxymethylen (POM) und kann mit Fasern, wie z. B. Glasfasern oder textilen Naturfasern, verstärkt sein.

Die Dekorschicht besteht aus einem thermoplastischen Elastomer aus der Gruppe thermoplastischer Polyetherester (TPEE), Polyvinylchlorid (PVC), thermoplastisches Polystyrol (TPS), thermoplastisches Polyurethan (TPU) und kann als kompakte Schicht oder als geschäumte Schicht ausgebildet sein.

Der Träger mit integrierter Airbagabdeckung bildet den Ausgangspunkt für die Herstellung des Innenverkleidungsbauteils, wobei die Airbagabdeckung auf unterschiedliche Weise im Träger integriert werden kann. Eine bevorzugte Ausgestaltung des Verfahrens sieht vor, dass Träger mit Airbagabdeckung in einem Formgebungsschritt im Spritzgießverfahren hergestellt werden. Es kann jedoch auch vorteilhaft sein, die vorgefertigte Airbagabdeckung in ein entsprechendes Spritzgießwerkzeug einzulegen und anschließend mit dem Trägermaterial zu umspritzen.

Wie bereits eingangs erwähnt, weist der Träger im Bereich der Airbagabdeckung mindestens einen Durchbruch auf, der ein Überfluten der Airbagabdeckung auf ihrer Rückseite mit Dekormaterial zulässt. Eine vorteilhafte Ausführungsform der vorliegenden Erfindung sieht mehrere Durchbrüche im Bereich der Airbagabdeckung vor, wobei mindestens ein Durchbruch im Scharnierbereich des Deckels erfindungswesentlich ist, da hier mit Hilfe des Elastomers zusätzlich das Scharnier ausgebildet wird. Darüber hinaus ist es jedoch vorteilhaft, wenn auch im Deckelbereich weitere Durchbrüche angeordnet sind, wodurch eine zusätzliche mechanische Verbindung erzielt wird, die den Splitterschutz weiter verbessert. Eine Verteilung der Durchbrüche auf der Airbagabdeckung über den Scharnierbereich hinaus hat den zusätzlichen positiven Vorteil, dass generell das Überfluten der Rückseite der Airbagabdeckung erleichtert wird.

Eine alternative Ausgestaltung der vorliegenden Erfindung sieht vor, die Durchbrüche auf dem Träger und die entsprechende Kavität auf der Rückseite der Airbagabdeckung so zu gestalten, dass im zweiten Fertigungsschritt eine netzartige Beschichtung auf der Rückseite der Airbagabdeckung ausgebildet wird, die die gewünschte Splitterschutzfunktion erfüllt, ohne dass eine vollständige rückseitige Bedeckung der Airbagabdeckung erforderlich ist.

Die Materialeigenschaften des Elastomers sind so ausgewählt, dass der Kunststoff eine ausreichende Festigkeit und Elastizität besitzt, um als Scharnier zu fungieren und gleichzeitig einen optimalen Splitterschutz zu gewährleisten.

Dieses Eigenschaftsprofil bringt es mit sich, dass die für das problemlose Öffnen des Airbags erforderlichen Sollbruchlinien vorteilhaft erst während oder nach der Fertigstellung des Bauteils ausgebildet werden, damit die Sollbruchlinie im Wesentlichen frei von dem Elastomer ist. Die Sollbruchlinie selber ist dabei als Nut oder Perforation ausgebildet, die den Träger durchdringt und vorteilhaft bis in die Dekorschicht hineinreicht. Eine besonders bevorzugte Ausgestaltung der Erfindung sieht vor, dass das Bauteil im Bereich der Sollbruchlinie bis auf eine dünne Restwand in der Dekorschicht geschwächt ist, sodass das Öffnen gezielt an der Sollbruchlinie stattfindet, während das Scharnier, das aus einer dicken Elastomerschicht besteht, in der Lage ist, die gesamte Airbagabdeckung nach dem Öffnen zu halten und beim Öffnen gleichzeitig Energie zu absorbieren.

Die Airbagabdeckung selber kann unterschiedlich gestaltet werden. Die einfachste Ausführungsform sieht vor, dass die Airbagabdeckung Teil des Trägers ist und mit dem Träger zusammen im ersten Fertigungsschritt gegossen wird, wobei die erforderlichen Durchbrüche durch eine geeignete Ausgestaltung der Gießform ausgebildet werden.

Es kann jedoch auch vorteilhaft sein, die Airbagabdeckung als separates Teil herzustellen und vor dem ersten Formgebungsschritt in das Formwerkzeug einzulegen, wobei die Airbagabdeckung im ersten Formgebungsschritt vom Trägermaterial umschlossen wird und so ein Träger mit einer integrierten Airbagabdeckung ausgebildet wird. Auch in diesem Fall werden die für das spätere Überfluten erforderlichen Durchbrüche durch eine geeignete Ausgestaltung der Gießform ausgebildet bzw. werden vorher schon bei der Fertigung der separaten Airbagabdeckung realisiert.

Ziel der vorliegenden Erfindung ist es auch, ein Verfahren zur Herstellung eines Innenverkleidungsbauteils für ein Kraftfahrzeug anzubieten, bei dem die wesentlichen Schritte der Bauteilherstellung nach Möglichkeit in einem einzigen Werkzeug durchgeführt werden, sodass eine mehrstufige Montage mit hohem Personalaufwand überflüssig wird.

Erfindungsgemäß wird daher die Herstellung des Innenverkleidungsbauteils, das im Wesentlichen aus einer Dekorschicht und einem Träger aufgebaut ist, in einem einzigen, jedoch mindestens zwei Stufen umfassenden Formwerkzeug über mindestens zwei Spritzgießzyklen durchgeführt. Dabei wird in einer ersten Stufe mit einem ersten Formgegenstück und einer ersten Kavität über einen ersten Spritzgießzyklus der Träger mit der integrierten Airbagabdeckung aus einem thermoplastischen Kunststoff aus der Gruppe Polypropylen (PP), Polybutylenterephthalat (PBT), Polyamid (PA), Acrylnitril-Butadien-Styrol (ABS), Acrylnitril-Butadien-Styrol / Polycarbonat-Copolymerisat (ABS/PC) oder Polyoxymethylen (POM) ausgebildet.

Nach dem Aushärten des Trägers wird in einer zweiten Stufe mit einem zweiten Formgegenstück in einem zweiten Spritzgießzyklus die Dekorschicht aus einem thermoplastischen Elastomer aus der Gruppe thermoplastischer Polyetherester (TPEE), thermoplastisches Polystyrol (TPS), thermoplastisches Vulkanisat (TPEV), Polyvinylchlorid (PVC) oder thermoplastisches Polyurethan (TPU) auf den Träger aufgebracht, wobei der Träger mit dem thermoplastischen Elastomer beflutet wird.

Vor dem Überfluten des Trägers wird ein im Formwerkzeugkern im Bereich der Airbagabdeckung vorgesehener Schieber zurückgeschoben und die zweite Kavität wird im Bereich der Airbagabdeckung zur Rückseite des Trägers hin erweitert, sodass beim Überfluten des Trägers mit dem thermoplastischen Elastomer durch die im Träger bzw. in der Airbagabdeckung vorgesehenen Durchbrüche die Dekorschicht bis auf die Rückseite der Airbagabdeckung erweitert wird. Auf diese Weise wird mit dem thermoplastischen Elastomer eine multifunktionelle, die Airbagabdeckung beidseitig umschließende Schicht ausgebildet, die zur Sichtseite des Innenverkleidungsbauteils hin optische und haptische Funktionen besitzt und im Bereich der Airbagabdeckung zusätzliche Funktionen als Scharnier, Splitterschutz und Energieabsorber aufweist. Die Funktionsbereiche der multifunktionellen Schicht sind als eine stoffliche Einheit ausgebildet, in die die Airbagabdeckung sandwichartig eingelagert ist.

Das Trägermaterial kann zusätzlich durch den Einbau von Glasfasern oder textilen Naturfasern verstärkt werden. Die Dekorschicht selber kann je nach Bedarf als kompakte Schicht oder als geschäumte Schicht ausgebildet werden, wobei sie jedoch auf der Rückseite des Trägers im Bereich des Airbags sowie im Bereich des Scharniers, wo sie eine Splitterschutz- und Energieabsorptionsfunktion besitzt, stets als kompakte Schicht ausgebildet ist.

Da die multifunktionelle Schicht eine relativ hohe Stabilität aufweist, muss die für das Öffnen der Airbagabdeckung erforderliche Sollbruchlinie so angeordnet sein, dass sie im Wesentlichen frei von der multifunktionellen Schicht ist und vorteilhaft durch den Träger bis in die Dekorschicht reicht.

Das Einbringen der Sollbruchlinie kann in einem separaten Arbeitsgang nach dem Öffnen des Formwerkzeuges in das bereits vom Kern befreite und noch am zweiten Formgegenstück anliegende Bauteil eingebracht werden.

Eine besonders vorteilhafte Ausführungsform des erfindungsgemäßen Verfahrens sieht jedoch vor, dass das Bauteil während der Spritzgießzyklen mit Hilfe eines im Formwerkzeug integrierten Perforationswerkzeuges mit einer Sollbruchlinie versehen wird. Zu diesem Zweck kann bspw. im Formwerkzeugkern ein verschiebbar angeordnetes Perforationswerkzeug integriert sein, das mit einem Perforationsmesser oder mit Perforationsnadeln bestückt ist, wobei das Perforationswerkzeug so angeordnet ist, dass es während des ersten Spritzgießzyklus in die Trägerschicht hineinragt und damit Durchbrüche im Träger generiert, während im zweiten Spritzgießzyklus das verschiebbar angeordnete Perforationswerkzeug in Form eines Messers oder in Form von Nadeln in die Dekorschicht vorgeschoben wird.

Diese Verfahrensvariante lässt sich besonders vorteilhaft mit der Ausbildung einer geschäumten Schicht im zweiten Spritzgießzyklus kombinieren, bei der das zweite Formgegenstück einen Expansionshub durchläuft, währenddessen das mit einem physikalischen oder chemischen Treibmittel beladene thermoplastische Elastomer aufschäumt und eine Schaumschicht ausbildet, die zur Sichtseite des Innenverkleidungsbauteils hin eine kompakte Haut aufweist.

Bei einer bevorzugten Variante dieser Ausführungsform wird die Sollbruchlinie durch die geschäumte Schicht bis hin zur kompakten Außenhaut ausgebildet.

Die vorliegende Erfindung betrifft auch eine Vorrichtung zur Herstellung eines Innenverkleidungsbauteils für Kraftfahrzeuge mit integrierter Airbagabdeckung, wobei die Vorrichtung ein mindestens zweistufiges Formwerkzeug mit einem Formwerkzeugkern und einem ersten Formgegenstück mit einer ersten Kavität zur Ausbildung eines Trägers mit einer integrierten Airbagabdeckung in einer ersten Verfahrensstufe sowie einem zweiten Formgegenstück mit einer zweiten Kavität zur Ausbildung einer Dekorschicht in einer zweiten Verfahrensstufe umfasst. Gleichzeitig ist der die Rückseite der Airbagabdeckung bildende Teil des Formwerkzeugkerns als Schieber zur Ausbildung einer zusätzlichen Kavität auf der Rückseite des Trägers bzw. der Airbagabdeckung vorgesehen. Diese zusätzliche Kavität kommt beim zweiten Spritzgießzyklus zum Einsatz, und dient dazu, die Rückseite des Trägers bzw. der Airbagabdeckung mit einer elastischen Schicht zu versehen, die die Funktion eines Splitterschutzes übernimmt. Gleichzeitig erfüllt die Schicht im Bereich der entsprechenden Durchbrüche die Funktion eines Scharniers und Energieabsorbers.

Eine besonders vorteilhafte Ausführungsform der erfindungsgemäßen Vorrichtung weist zusätzlich im Formwerkzeugkern verschiebbar angeordnete Perforationswerkzeuge auf, mit deren Hilfe während des Herstellprozesses des Innenverkleidungsbauteils in das Bauteil bereits Sollbruchlinien eingebracht werden können. Als Perforationswerkzeuge sind verschiebbar angeordnete Schneidmesser oder Perforationsnadeln geeignet. Bei einer ebenfalls bevorzugten Ausgestaltung der erfindungsgemäßen Vorrichtung ist vorgesehen, dass die Kavität des zweiten Formgegenstückes zur Ausbildung einer geschäumten Schicht expandierbar ausgeführt ist.

Im Folgenden wird die Erfindung anhand von Zeichnungen ausführlich erläutert. Dabei zeigen
- Fig. 1: einen Querschnitt durch ein Innenverkleidungsbauteil,
- Fig. 2: den Querschnitt einer schematischen Darstellung eines zweistufigen Formwerkzeuges vor dem ersten Formge- bungszyklus,
- Fig. 3: den Querschnitt einer schematischen Darstellung eines zweistufigen Formwerkzeuges vor dem zweiten Formge- bungszyklus,
- Fig. 4: den Querschnitt eines zweistufigen Formwerkzeuges nach dem zweiten Formgebungszyklus,
- Fig. 5: den Querschnitt eines Ausschnittes eines Innenver- kleidungsbauteiles und
- Fig. 6: den Querschnitt eines Teilbereichs eines Innenver- kleidungsbauteils.

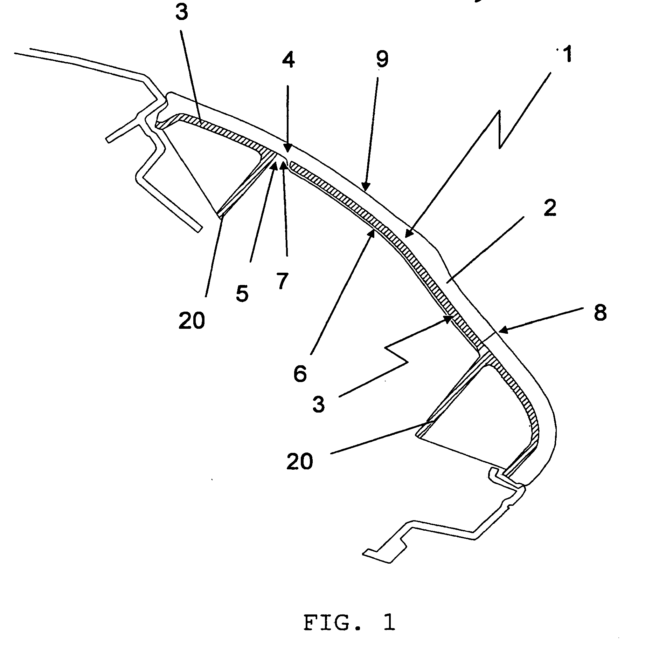

In der Figur 1 ist ein Innenverkleidungsbauteil mit einer integrierten Airbagabdeckung 1 im Querschnitt dargestellt. Es handelt sich in diesem Fall um eine Armaturentafel, die im Wesentlichen aus einem Träger 3 mit einer integrierten Airbagabdeckung 1 und einer Dekorschicht 2 aufgebaut ist. Der Träger 3 weist dabei unterschiedliche Bereiche auf, so ist beispielsweise direkt neben dem Bereich der Airbagabdeckung dem Träger 3 ein Schusskanal 20 angeformt. Im Bereich der Airbagabdeckung 1 weist der Träger 3 einen Durchbruch 5 auf, der bei der vorliegenden Darstellung mit dem elastischen Material der Dekorschicht 2 ausgefüllt ist, sodass dort ein Scharnier 4 gebildet wird, das im Falle des Entfaltens des Airbags ein Aufklappen der Airbagabdeckung 1 ermöglicht und dabei gleichzeitig als Energieabsorber wirkt. Um dieses Aufklappen im Falle eines Crashs kontrolliert zu gestalten, ist auf der dem Scharnier 4 gegenüberliegenden Seite der Airbagabdeckung 1 eine Sollbruchlinie 8 so angeordnet, dass sie durch den Träger 3 hindurch bis in die Dekorschicht 2 hineinreicht und damit eine ausreichende Schwächung des Bauteils im Bereich der Airbagabdeckung 1 bewirkt, um ein gezieltes und problemloses Öffnen der Abdeckung 1 zu gewährleisten. Dieser Verschwächungshereich 8 begrenzt die Airbagabdeckung 1 korrespondierend zum Bereich des Scharniers 4, sodass die Airbagabdeckung 1 am Scharnier 4 aufklappen kann.

Die Airbagabdeckung 1 ist sandwichartig in die Dekorschicht 2 eingelagert, wobei die Dekorschicht 2 als multifunktionelle, die Airbagabdeckung 1 beidseitig umschließende Schicht ausgebildet ist. Diese Schicht besitzt zur Sichtseite des Innenverkleidungsbauteils optische und haptische Funktionen, auf der Rückseite der Airbagabdeckung 1 hat diese Schicht die Funktion eines Splitterschutzes 6. Im Bereich des Durchbruchs 5 besitzt die Dekorschicht 2 darüber hinaus die Funktion eines Scharniers 4 und eines Energieabsorbers.

Um diese Funktionen erfüllen zu können, wird zur Herstellung der Dekorschicht bevorzugt ein thermoplastisches Elastomer aus der Gruppe thermoplastischer Polyetherester (TPEE), thermoplastisches Polystyrol (TPS), thermoplastisches Vulkanisat (TPEV), Polyvinylchlorid (PVC) oder thermoplastisches Polyurethan (TPU) eingesetzt. Dabei kann die Dekorschicht 2 kann als kompakte Schicht oder als geschäumte Schicht ausgebildet werden. In jedem Fall wird jedoch der Bereich des Splitterschutzes 6 auf der Rückseite der Airbagabdeckung 1 als kompakte Schicht ausgebildet. Auch im Bereich des Scharniers 4 ist ein Teil der Dekorschicht 2 als kompakte Schicht ausgebildet, um eine ausreichende Stabilität des Scharniers 4 zu erreichen und eine Energieabsorption zu ermöglichen. Hier gilt das gleiche wie für den Bereich des Splitterschutzes 6, wo die Dekorschicht 2 eine ausreichende Festigkeit aufweisen muss, um die gewünschte Sicherheit für die Fahrzeuginsassen gewährleisten zu können und ein Splittern der Abdeckung zu vermeiden.

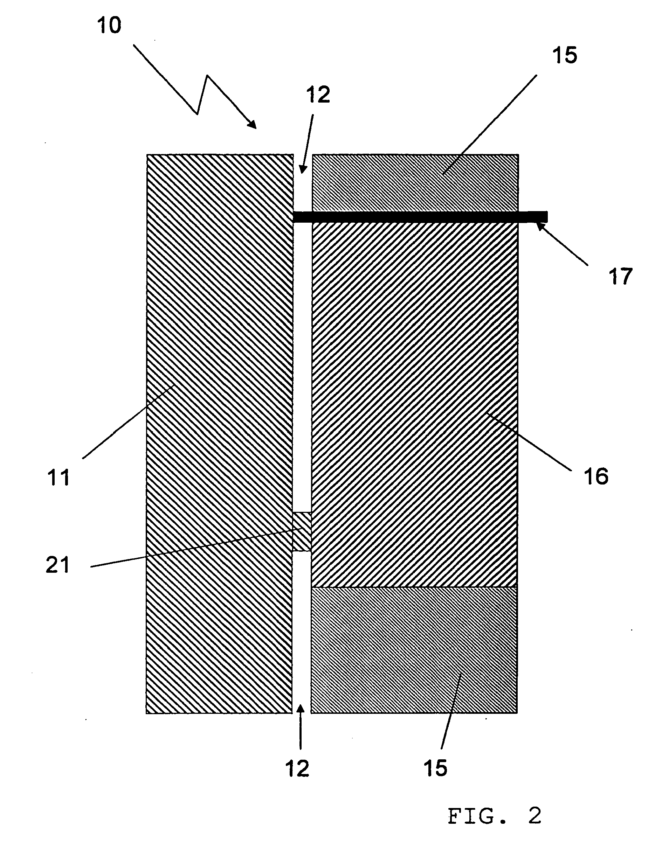

Die Figur 2 zeigt schematisch dargestellt im Querschnitt einen Ausschnitt eines zweistufigen Formwerkzeugs 10. Das Formwerkzeug 10 besteht im Wesentlichen aus einem Formwerkzeugkern 15 und einem ersten Formgegenstück 11, zwischen denen beiden eine erste Kavität 12 ausgebildet ist, die für die Herstellung des Trägers vorgesehen ist. Im Bereich der Airbagabdeckung weist der Formwerkzeugkern 15 einen Schieber 16 auf, der verschiebbar im Formwerkzeugkern 15 integriert ist. An der Grenze der Airbagabdeckung 1 ist bei der in der Figur 2 gezeigten Ausführungsform der erfindungsgemäßen Vorrichtung zur Herstellung eines Innenverkleidungsbauteils ein verschiebbar angeordnetes Perforationswerkzeug 17 zu erkennen, das bei der vorliegenden Darstellung in die Kavität 12 hineinragt. Unterbrochen ist die Kavität darüber hinaus im Bereich des späteren Durchbruchs für das Scharnier durch eine entsprechende Ausformung 21 am ersten Formgegenstück 11.

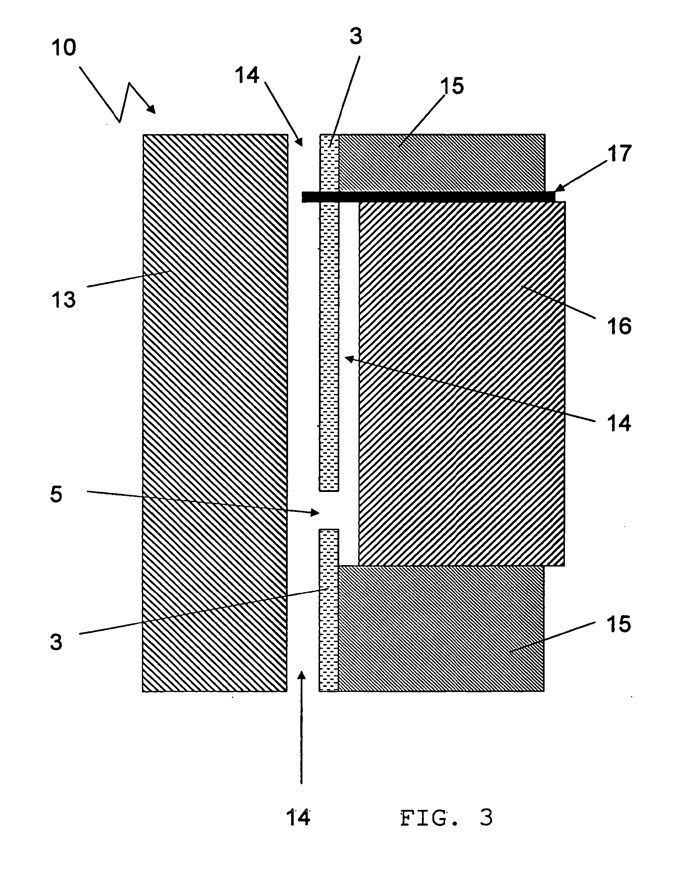

In der Figur 3 ist das zweistufige Formwerkzeug 10 aus der Figur 2 ebenfalls als schematische Schnittdarstellung eines Teilbereiches des Formwerkzeugs 10 nach dem ersten Formgebungszyklus zu sehen. Der Formwerkzeugkern 15 ist unverändert, während das erste Formgegenstück, das zur Ausbildung des Trägers 3 genutzt wurde, bereits durch ein zweites Formgegenstück 13 ersetzt ist. Zwischen dem am Formwerkzeugkern 15 verbliebenen Träger 3 und dem Formgegenstück 13 ist eine zweite Kavität 14 ausgebildet, die über einen Durchbruch 5 bis zur Rückseite des Trägers 3 hin erweitert ist, da auch der im Formwerkzeug 15 integrierte Schieber 16 bereits nach hinten verschoben wurde und damit die Erweiterung der Kavität bewirkt hat. Bei der in der Figur 3 gewählten Darstellung ist das ebenfalls im Formwerkzeugkern 15 integrierte, verschiebbar angeordnete Perforationswerkzeug 17 bis in die zweite Kavität 14 vorgeschoben.

Die in Figur 3 gewählte Darstellung zeigt das Formwerkzeug 10 vor dem zweiten Formgebungszyklus, bei dem die Kavität 14 mit dem thermoplastischen Elastomer für die Dekorschicht gefüllt wird, deren Ausbildung auf zweierlei Art erfolgen kann. Einerseits kann eine kompakte Schicht ausgebildet werden, wobei in die in der Figur 3 gezeigten zweiten Kavität 14 ein thermoplastisches Elastomer injiziert wird, das sich mit dem Träger 3 verbindet und nach dem Erkalten den Träger 3 im Bereich der Airbagabdeckung sandwichartig einlagert. Im Bereich des Durchbruchs 5 wird dabei ein Scharnier ausgebildet, das gleichzeitig Energie absorbieren kann, während die Dekorschicht auf der Rückseite der Airbagabdeckung die Funktion eines Splitterschutzes übernimmt.

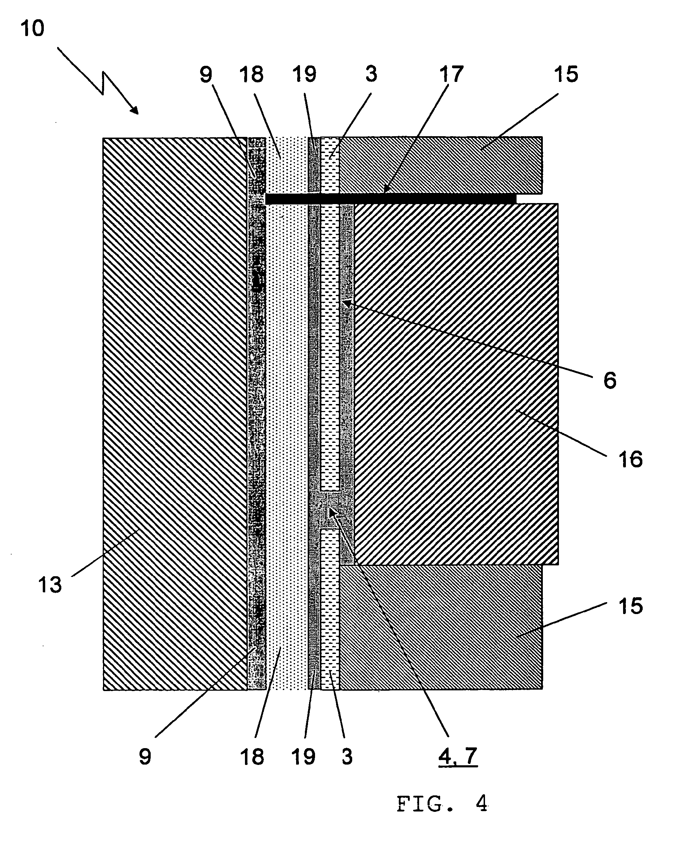

In der Figur 4 ist eine weitere vorteilhafte Möglichkeit zur Gestaltung der Dekorschicht aufgezeigt. Die Figur 4 zeigt das Formwerkzeug 10 aus Figur 3 nach einem zweiten Formgebungszyklus, bei dem zusätzlich mit dem Formgegenstück 13 ein Expansionshub durchgeführt wurde. Zur Ausbildung der Dekorschicht 2 wurde ein mit chemischen oder physikalischen Treibmitteln beladenes thermoplastisches Elastomer eingesetzt, sodass sich nach dem Expansionshub eine geschäumte Dekorschicht ausgebildet hat, die sich aus einer Dekorhaut 9, einer Schaumschicht 18 und einer kompakten Schicht 19 zusammensetzt. Die Dekorhaut 9 bildet dabei die Sichtseite des späteren Innenverkleidungsbauteils. An die Dekorhaut 9 schließt sich eine Schaumschicht 18 an, die insbesondere die haptischen Eigenschaften der Dekorschicht bestimmt. Zum Träger 3 hin und auf der Rückseite des Trägers 3 sowie im Bereich des Scharniers 4 ist eine kompakte Schicht 19 ausgebildet, die auf der Rückseite des Trägers 3 die Funktion des Splitterschutzes 6 übernimmt und (im Bereich des Durchbruchs 5 aus der Figur 3) das Scharnier 4 ausbildet. Das im Formwerkzeugkern 15 integrierte Perforationswerkzeug 17 wurde während des zweiten Formgebungszyklus bis hin zur Formhaut 9 in die Dekorschicht 2 eingeführt, um auf diese Weise die spätere Sollbruchlinie auszubilden.

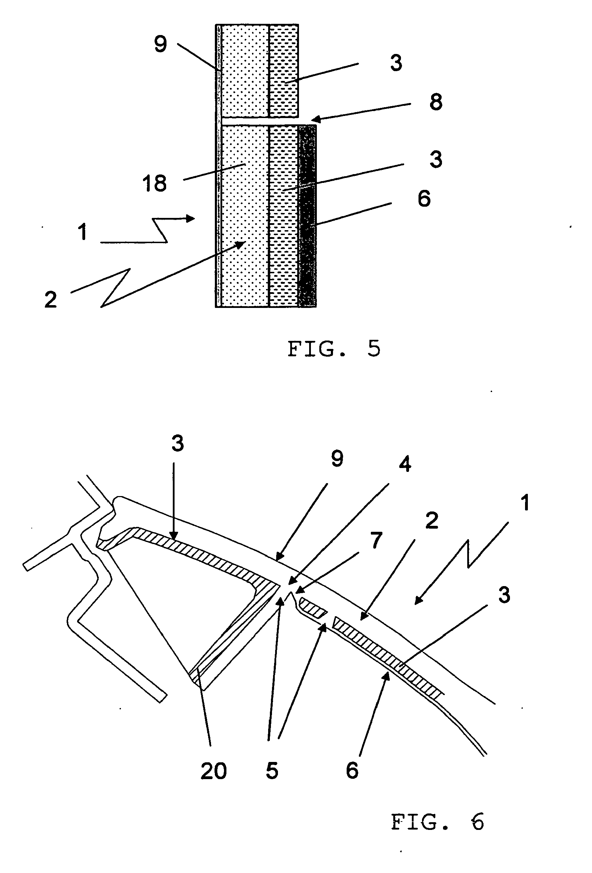

Die Figur 5 zeigt einen Querschnitt eines Ausschnittes eines Innenverkleidungsbauteiles mit integrierter Airbagabdeckung 1 mit einer Dekorschicht 2, die aus einer Formhaut 9 und einer geschäumten Schicht 18 aufgebaut ist. Auf der Rückseite des Trägers 3 ist ein Splitterschutz 6 ausgebildet. Des Weiteren ist in dieser Abbildung die Sollbruchlinie 8 zu erkennen, die nach dem Entfernen des verschiebbar angeordneten Perforationswerkzeuges im Innenverkleidungsbauteil ausgebildet ist und dabei bis zur Formhaut 9 vordringt.

Die Figur 6 zeigt stellvertretend für viele weitere Variationsmöglichkeiten des erfindungsgemäßen Verfahrens bzw. der entsprechenden Bauteile einen Schnitt eines Innenverkleidungsbauteiles, bei dem mehrere Durchbrüche 5 im Träger 3 zur Überflutung der Rückseite des Trägers 3 bzw. der Airbagabdeckung 1 mit der Dekorschicht 2 vorgesehen sind. Auf diese Weise wird die Ausbildung des Splitterschutzes 6 auf der Rückseite des Trägers 3 bzw. der Airbagabdeckung 1 erleichtert. Des Weiteren ist bei der in Figur 6 dargestellten Ausgestaltung der vorliegenden Erfindung im Bereich des Scharniers 4 zusätzlich eine Überflutung des Schusskanals 20 mit Dekormaterial zu erkennen, was durch eine entsprechende Gestaltung des im Formwerkzeugkern vorgesehenen Schiebers erreicht werden kann. Diese Überflutung des Trägers 20 mit Dekormaterial bewirkt eine Verstärkung des Scharniers 4, wodurch die Sicherheit der Fahrzeuginsassen beim Entfalten des Airbags weiter erhöht wird, da auf diese Weise ein zusätzlicher Halt der Airbagabdeckung am Träger 3 bewirkt wird.

### Bezugszeichenliste

- 1: Airbagabdeckung
- 2: Dekorschicht
- 3: Träger
- 4: Scharnier
- 5: Durchbruch
- 6: Splitterschutz
- 7: Energieabsorber
- 8: Sollbruchlinie
- 9: Dekorhaut
- 10: Formwerkzeug
- 11: erstes Formgegenstück
- 12: erste Kavität
- 13: zweites Formgegenstück
- 14: zweite Kavität
- 15: Formwerkzeugkern
- 16: Schieber
- 17: Perforationswerkzeug
- 18: geschäumte Schicht
- 19: kompakte Schicht
- 20: Schusskanal
- 21: Ausformung

## Patentansprüche

1. Innenverkleidungsbauteil für Kraftfahrzeuge, das im Wesentlichen aus einer Dekorschicht (2) und einem eine integrierte Airbagabdeckung (1) aufweisenden Träger (3) aufgebaut ist, wobei der Träger (3)im Bereich eines Scharniers (4) für die Airbagabdeckung (1) mindestens einen Durchbruch (5) aufweist,
**dadurch gekennzeichnet, dass**
die Dekorschicht (2) im Bereich der Airbagabdeckung (1) als multifunktionelle, die Airbagabdeckung (1) beidseitig umschließende Schicht ausgebildet ist, wobei die Schicht zur Sichtseite des Innenverkleidungsbauteils hin optische und haptische Funktionen besitzt und im Bereich der Airbagabdeckung (1) zusätzliche Funktionen als Scharnier (4), Splitterschutz (6) und Energieabsorber (7) aufweist, wobei die Funktionsbereiche der multifunktionellen Schicht stofflich eine Einheit bilden, in die die Airbagabdeckung (1) sandwichartig eingelagert ist.

2. Bauteil nach Anspruch 1,
**dadurch gekennzeichnet, dass**
der Träger (3) aus einem thermoplastischen Kunststoff aus der Gruppe Polypropylen (PP), Polybutylenterephthalat (PBT), Polyamid (PA), Acrylnitril-Butadien-Styrol (ABS), Acrylnitril-Butadien-Styrol / Polycarbonat Copolymerisat (ABS-PC) oder Polyoxymethylen (POM) besteht.

3. Bauteil nach Anspruch 1 oder 2,
**dadurch gekennzeichnet, dass**
der Träger (3) mit Fasern, ausgewählt aus der Gruppe Glasfasern oder textile Naturfasern verstärkt ist.

4. Bauteil nach einem der Ansprüche 1 bis 3,
**dadurch gekennzeichnet, dass**
die Dekorschicht (2) aus einem thermoplastischen Elastomer aus der Gruppe thermoplastischer Polyetherester (TPEE), thermoplastisches Polystyrol (TPS), thermoplastisches Vulkanisat (TPEV), Polyvinylchlorid (PVC) oder thermoplastisches Polyurethan (TPU) besteht.

5. Bauteil nach einem der Ansprüche 1 bis 4,
**dadurch gekennzeichnet, dass**
die Dekorschicht (2) als kompakte Schicht ausgebildet ist.

6. Bauteil nach einem der Ansprüche 1 bis 5,
**dadurch gekennzeichnet, dass**
die Dekorschicht (2) chemisch oder physikalisch geschäumt ist.

7. Bauteil nach einem der Ansprüche 1 bis 6,
**dadurch gekennzeichnet, dass**
zusätzliche Durchbrüche (5) im Bereich der Airbagabdeckung (1) angeordnet sind.

8. Bauteil nach einem der Ansprüche 1 bis 7,
**dadurch gekennzeichnet, dass**
die Airbagabdeckung (1) außerhalb des Scharnierbereichs (4) durch eine, den Träger (3) durchdringende, bis in die Dekorschicht (2) reichende, als Perforation oder Nut ausgebildete Sollbruchlinie (8) begrenzt ist.

9. Bauteil nach einem der Ansprüche 1 bis 8,
**dadurch gekennzeichnet, dass**
das Innenverkleidungsbauteil in der Dekorschicht (2) durch die Ausbildung einer Sollbruchlinie (8) bis auf eine dünne, als Dekorhaut (9) ausgebildete Restwand geschwächt ist.

10. Verfahren zur Herstellung eines Innenverkleidungsbauteils für ein Kraftfahrzeug, wobei das Innenverkleidungsbauteil im Wesentlichen aus einer Dekorschicht (2) und einem eine integrierte Airbagabdeckung (1) aufweisenden Träger (3) aufgebaut ist, wobei der Träger (3) im Bereich eines Scharniers (4) für die Airbagabdeckung (1) mindestens einen Durchbruch (5) aufweist, wobei das Verfahren mindestens zwei Spritzgießzyklen in einem mindestens zweistufigen Formwerkzeug (10) umfasst, wobei
a) in einer ersten Stufe mit einem ersten Formgegenstück (11) und einer ersten Kavität (12) über einen ersten Spritzgießzyklus mit einem thermoplastischen Kunststoff der Träger (3) mit einer integrierten Airbagabdeckung (1) ausgebildet wird; und
b) in einer zweiten Stufe mit einem zweiten Formgegenstück (13) und einer zweiten Kavität (14) in einem zweiten Spritzgießzyklus durch Überfluten des Trägers (3) mit einem thermoplastischen Elastomer die Dekorschicht (2) ausgebildet wird,
**dadurch gekennzeichnet, dass**
vor dem Überfluten des Trägers (3) ein im Formwerkzeugkern (15) im Bereich der Airbagabdeckung (1) vorgesehener Schieber (16) zurückgeschoben und die zweite Kavität (14) über den Durchbruch (5) zur Rückseite des Trägers (3) hin erweitert wird, so dass beim Überfluten des Trägers (3) mit dem thermoplastischen Elastomer eine multifunktionelle, die Airbagabdeckung (1) beidseitig umschließende Schicht (2) ausgebildet wird, wobei die Schicht (2) zur Sichtseite des Innenverkleidungsbauteils hin optische und haptische Funktionen besitzt und im Bereich der Airbagabdeckung (1) zusätzliche Funktionen als Scharnier (4), Splitterschutz (6) und Energieabsorber (7) aufweist, wobei die Funktionsbereiche der multifunktionellen Schicht (2) eine stoffliche Einheit bilden, in die die Airbagabdeckung (1) sandwichartig eingelagert wird.

11. Verfahren nach Anspruch 10,
**dadurch gekennzeichnet, dass**
das Bauteil nach seiner Fertigstellung mit einer Sollbruchlinie (8) versehen wird.

12. Verfahren nach Anspruch 10,
**dadurch gekennzeichnet, dass**
das Bauteil während der Spritzgießzyklen mit Hilfe eines im Formwerkzeugkern (15) integrierten Perforationswerkzeugs (17) mit einer Sollbruchlinie (8) versehen wird.

13. Verfahren nach Anspruch 12,
**dadurch gekennzeichnet, dass**
als Perforationswerkzeug (17) Schneidmesser oder Perforationsnadeln eingesetzt werden.

14. Verfahren nach einem der Ansprüche 10 bis 13,
**dadurch gekennzeichnet, dass**
während des zweiten Spritzgießzyklus zur Ausbildung einer geschäumten Schicht (18) ein Expansionshub durchlaufen wird.

15. Vorrichtung zur Herstellung eines Innenverkleidungsbauteils für Kraftfahrzeuge mit integrierter Airbagabdeckung (1), wobei die Vorrichtung ein mindestens zweistufiges Formwerkzeug (10) mit einem Formwerkzeugkern (15) und einem ersten Formgegenstück (11) mit einer ersten Kavität (12) zur Ausbildung eines Trägers (3) mit einer integrierten Airbagabdeckung (1) in einer ersten Verfahrensstufe sowie einem zweiten Formgegenstück (13) mit einer zweiten Kavität (14) zur Ausbildung einer Dekorschicht (2) in einer zweiten Verfahrensstufe umfasst,
**dadurch gekennzeichnet, dass**
ein Teil des Formwerkzeugkerns (15) im Bereich der Airbagabdeckung (1) als Schieber (16) zur Ausbildung einer zusätzlichen Kavität (14) auf der Rückseite der Airbagabdeckung (1) im zweiten Spritzgießzyklus vorgesehen ist.

16. Vorrichtung nach Anspruch 15,
**dadurch gekennzeichnet, dass**
im Formwerkzeugkern (15) ein verschiebbar angeordnetes Perforationswerkzeug (17) integriert ist.

17. Vorrichtung nach Anspruch 16,
**dadurch gekennzeichnet, dass**
das Perforationswerkzeug (17) ein Schneidmesser und/oder Perforationsnadeln umfasst.

18. Vorrichtung nach einem der Ansprüche 15 bis 17,
**dadurch gekennzeichnet, dass**
die zweite Kavität (14) des zweiten Formgegenstücks (13) zur Ausbildung einer geschäumten Schicht (18) expandierbar ist.

## Claims

1. An inner lining component for motor vehicles, which is formed essentially from a decorative layer (2) and a carrier (3) having an integrated airbag covering (1), wherein the carrier (3) has at least one perforation (5) in the region of a hinge (4) for the airbag covering (1), **characterized in that** the decorative layer (2) in the region of the airbag covering (1) is designed in the form of a multi-functional layer which encloses the airbag covering (1) on both sides, wherein the layer has visual and tactile functions towards the visible side of the inner lining component and in the region of the airbag covering (1) has additional functions as a hinge (4), shatter protection (6) and energy absorber (7), wherein the functional regions of the multi-functional layer form a unit in terms of material in which the airbag covering (1) is embedded in the manner of a sandwich.

2. A component according to claim 1, **characterized in that** the carrier (3) consists of a thermoplastic plastics material from the group of polypropylene (PP), polybutylene terephthalate (PBT), polyamide (PA), acrylonitrile butadiene styrene (ABS), acrylonitrile butadiene styrene / polycarbonate copolymerizate (ABSPC) or polyoxymethylene (POM).

3. A component according to claim 1 or 2, **characterized in that** the carrier (3) is reinforced with fibres selected from the group of glass fibres or textile natural fibres.

4. A component according to any one of claims 1 to 3, **characterized in that** the decorative layer (2) consists of a thermoplastic elastomer from the group of thermoplastic polyether ester (TPEE), thermoplastic polystyrene (TPS), thermoplastic vulcanizate (TPEV), polyvinyl chloride (PVC) or thermoplastic polyurethane (TPU).

5. A component according to any one of claims 1 to 4, **characterized in that** the decorative layer (2) is formed as a compact layer.

6. An inner lining component according to any one of claims 1 to 5, **characterized in that** the decorative layer (2) is foamed in a chemical or physical manner.

7. A component according to any one of claims 1 to 6, **characterized in that** additional perforations (5) are arranged in the region of the airbag covering (1).

8. A component according to any one of claims 1 to 7, **characterized in that** the airbag covering (1) is bounded outside the hinge region (4) by a pre-determined breaking line (8) which passes through the carrier (3) and extends into the decorative layer (2) and which is constructed in the form of a perforation or groove.

9. A component according to any one of claims 1 to 8, **characterized in that** the inner lining component in the decorative layer (2) is weakened by the formation of a pre-determined breaking line (8) as far as a thin residual wall formed as a decorative skin (9).

10. A method of producing an inner lining component for a motor vehicle, wherein the inner lining component essentially comprises a decorative layer (2) and a carrier (3) having an integrated airbag covering (1), wherein the carrier (3) has at least one perforation (5) in the region of a hinge (4) for the airbag covering (1), wherein the method comprises at least two injection-moulding cycles in an at least two-stage moulding tool (10), wherein
a) the carrier (3) is formed with an integrated airbag covering (1) in a first stage with a first moulding matching piece (11) and a first cavity (12) by way of a first injection-moulding cycle with a thermoplastic plastics material, and
b) the decorative layer (2) is formed in a second stage with a second moulding matching piece (13) and a second cavity (14) in a second injection-moulding cycle by flooding the carrier (3) with a thermoplastic elastomer,
**characterized in that** a slide (16) provided in the core (15) of the moulding tool in the region of the airbag covering (1) is pushed back before the flooding of the carrier (3), and the second cavity (14) is enlarged towards the rear side of the carrier (3) by way of the perforation (5), so that when the carrier (3) is flooded with the thermoplastic elastomer a multi-functional layer (2) enclosing the airbag covering (1) on both sides is formed, wherein the layer (2) has visual and tactile functions towards the visible side of the inner lining component and in the region of the airbag covering (1) has additional functions as a hinge (4), shatter protection (6) and energy absorber (7), wherein the functional regions of the multi-functional layer (2) form a material unit in which the airbag covering (1) is embedded in the manner of a sandwich.

11. A method according to claim 10, **characterized in that** after the component has been produced it is provided with a pre-determined breaking line (8).

12. A method according to claim 10, **characterized in that** during injection-moulding cycles the component is provided with a pre-determined breaking line (8) with the aid of a perforating tool (17) incorporated into the core (15) of the moulding tool.

13. A method according to claim 12, **characterized in that** cutting knives or perforating needles are used as the perforating tool (17).

14. A method according to any one of claims 10 to 13, **characterized in that** during the second injection-moulding cycle an expansion stroke is carried out in order to form a foamed layer (18).

15. An apparatus for producing an inner lining component for motor vehicles with an integrated airbag covering (1), wherein the apparatus comprises an at least two-stage moulding tool (10) with a core (15) and a first moulding matching piece (11) with a first cavity (12) for forming a carrier (3) with an integrated airbag covering (1) in a first method step and a second moulding matching piece (13) with a second cavity (14) for forming a decorative layer (2) in a second method step, **characterized in that** part of the core (15) of the moulding tool in the region of the airbag covering (1) is provided as a slide (16)in order to form an additional cavity (14) on the rear side of the airbag covering (1) in the second injection-moulding cycle.

16. An apparatus according to claim 15, **characterized in that** a perforating tool (17) arranged in a displaceable manner is incorporated into the core (15) of the moulding tool.

17. An apparatus according to claim 16, **characterized in that** the perforating tool (17) comprises a cutting knife and/or perforating needles.

18. An apparatus according to any of claims 15 to 17, **characterized in that** the second cavity (14) of the second moulding matching piece (13) is capable of being expanded in order to form a foamed layer (18).

## Revendications

1. Composant d'habillage intérieur de véhicule automobile constitué principalement d'une couche de décoration (2) et d'un support (3) ayant un couvercle (1) de coussin de sécurité, intégré,
- le support (3) ayant au moins un passage (5) au niveau d'une charnière (4) du couvercle (1) de coussin de sécurité,
composant **caractérisé en ce que**
la couche de décoration (2) est réalisée sous la forme d'une couche multifonctionnelle entourant les deux faces du couvercle (1) de coussin de sécurité dans la zone de ce couvercle (1),
- du côté visible du composant d'habillage intérieur, la couche a des fonctions optiques et haptiques et dans la zone du couvercle (1) de coussin de sécurité elle a en outre des fonctions de charnière (4), de protection contre les éclats (6) et d'absorbeur d'énergie (7),
- les zones fonctionnelles de la couche multifonctionnelle constituant une unité de matière dans laquelle le couvercle (1) de coussin de sécurité est intégré en sandwich.

2. Composant selon la revendication 1,
**caractérisé en ce que**
le support (3) est en une matière thermoplastique choisie dans le groupe comprenant, polypropylène (PP), polybutylènetéréphthalate (PBT), polyamide (PA), acrylnitril-butadiéne-styréne (ABS), copolymérisat de acrylnitril-butadiène-styrène/polycarbonate (ABS-PC) ou polyoxyméthylène (POM).

3. Composant selon la revendication 1 ou 2,
**caractérisé en ce que**
le support (3) est renforcé par des fibres choisies dans le groupe des fibres de verre ou des fibres textiles naturelles.

4. Composant selon l'une des revendications 1 à 3,
**caractérisé en ce que**
la couche de décoration (2) est en un élastomère thermoplastique du groupe comprenant : polyéther-ester-thermoplastique (TPEE), polystyrène thermoplastique (TPS), vulcanisat thermoplastique (TPEV), chlorure de polyvinyle (PVC) ou polyuréthane thermoplastique (TPU).

5. Composant selon l'une des revendications 1 à 4,
**caractérisé en ce que**
la couche de décoration (2) est une couche compacte.

6. Composant selon l'une des revendications 1 à 5,
**caractérisé en ce que**
la couche de décoration (2) est expansée de manière chimique ou physique.

7. Composant selon l'une des revendications 1 à 6,
**caractérisé en ce que**
des passages supplémentaires (5) sont prévus dans la zone du couvercle (1) de coussin de sécurité.

8. Composant selon l'une des revendications 1 à 7,
**caractérisé en ce que**
le couvercle (1) de coussin de sécurité est délimité au-delà de la zone de la charnière (4) par une ligne de rupture de consigne (8) traversant le support (3) pour arriver jusque dans la couche de décoration (2), cette ligne étant réalisée comme perforation ou comme rainure.

9. Composant selon l'une des revendications 1 à 8,
**caractérisé en ce que**
dans la couche de décoration (2), il est affaibli par la réalisation d'une ligne de rupture de consigne (8) arrivant jusqu'à une paroi résiduelle, mince, en forme de peau de décoration (9).

10. Procédé de fabrication d'un composant d'habillage intérieur d'un véhicule automobile,
selon lequel
le composant est formé principalement d'une couche de décoration (2) et d'un support (3) ayant un couvercle (1) de coussin de sécurité, intégré,
le support (3) ayant au moins un passage (5) dans la zone de charnière (4) du couvercle (1) de coussin de sécurité,
procédé comportant au moins deux cycles d'injection dans un outil de moulage (10) à au moins deux étages,
selon lequel
a) dans une première étape, avec un premier contre-moule (11) et une première cavité (12), par un premier cycle d'injection de matière thermoplastique, on réalise le support (3) avec un couvercle (1) de coussin de sécurité, intégré, et
b) dans une seconde étape, avec une seconde partie de moule (13) et une seconde cavité (14), au cours d'un second cycle d'injection, par recouvrement du support (3) avec un élastomère thermoplastique, on forme la couche de décoration (2),
procédé **caractérisé en ce que**
avant de recouvrir le support (3), on rétracte un tiroir (16) dans le noyau (15) de l'outil de moulage au niveau du couvercle (1) de coussin de sécurité, et on étend la seconde cavité (14) par le passage (5) vers le côté arrière du support (3) de sorte que lors du recouvrement du support (3) avec l'élastomère thermoplastique, on forme une couche (2) multifonctionnelle, couvrant les deux faces du couvercle (1) de coussin de sécurité,
la couche (2) ayant du côté apparent du composant, des fonctions optiques et haptiques, et au niveau du couvercle (1) de coussin de sécurité, les fonctions supplémentaires de charnière (4), de protection contre les éclats (6) et d'absorbeur d'énergie (7),
les zones fonctionnelles de la couche multifonctionnelle (2) constituant une unité de matière dans laquelle le couvercle (1) de coussin de sécurité est intégré en sandwich.

11. Procédé selon la revendication 10,
**caractérisé en ce qu'**
après sa fabrication, on munit le composant d'une ligne de rupture de consigne (8).

12. Procédé selon la revendication 10,
**caractérisé en ce que**
pendant les cycles d'injection, on munit le composant d'une ligne de rupture de consigne (8) réalisée avec un outil de perforation (17) intégré dans le noyau (15) de l'outil de moulage.

13. Procédé selon la revendication 12,
**caractérisé en ce que**
l'outil de perforation (17) est un couteau ou des aiguilles de perforation.

14. Procédé selon l'une des revendications 10 à 13,
**caractérisé en ce que**
pendant le second cycle d'injection, on exécute une course d'expansion pour développer une couche expansée (18).

15. Dispositif pour la fabrication d'un composant d'habillage intérieur de véhicule automobile à couvercle (1) de coussin de sécurité, intégré,
le dispositif comportant au moins un outil de moulage (10) à deux étages avec un noyau (15) de moule et un premier contre-moule (11) avec une première cavité (12) pour former un support (3) et un couvercle intégré (1) de coussin de sécurité, selon une première étape de procédé ainsi qu'un second contre-moule (13) avec une seconde cavité (14) pour former une couche de décoration (2) au cours d'une seconde étape de procédé,
dispositif **caractérisé en ce qu'**
une partie du noyau (15) du moule au niveau du couvercle (1) de coussin de sécurité, est constituée par un tiroir (16) pour développer une cavité (14) supplémentaire sur le côté arrière du couvercle (1) de coussin de sécurité au cours d'un second cycle d'injection.

16. Dispositif selon la revendication 15,
**caractérisé en ce qu'**
un outil de perforation (17) est intégré de manière coulissante dans le noyau (15) de l'outil de moulage.

17. Dispositif selon la revendication 16,
**caractérisé en ce que**
l'outil de perforation (17) comprend un couteau et/ou des aiguilles de perforation.

18. Dispositif selon l'une des revendications 15 à 17,
**caractérisé en ce que**
la seconde cavité (14) du second contre-moule (13) peut être expansée pour développer une couche expansée (18).
